# EUROPÄISCHE PATENTSCHRIFT

(11) **EP 4 732 062 B1**
(45) Veröffentlichungstag und Bekanntmachung des Hinweises auf die Patenterteilung: **03.06.2026**
(21) Anmeldenummer: 24733184.6
(22) Anmeldetag: 14.06.2024
(51) Int. Cl.: G02B 21/00, G02B 27/58, G01N 21/64

(54) **VERFAHREN ZUR LOKALISIERUNG UND/ODER ZUM VERFOLGEN VON EMITTERN IN EINER PROBE, COMPUTERPROGRAMM UND LICHTMIKROSKOP**
METHOD FOR LOCATING AND/OR FOR TRACKING EMITTERS IN A SAMPLE, COMPUTER PROGRAM AND LIGHT MICROSCOPE
PROCÉDÉ DE LOCALISATION ET/OU DE SUIVI D'ÉMETTEURS DANS UN ÉCHANTILLON, PROGRAMME INFORMATIQUE ET MICROSCOPE OPTIQUE

(30) Priorität: 23.06.2023 DE 102023116562
(43) Veröffentlichungstag der Anmeldung: 29.04.2026
(73) Patentinhaber: Abberior Instruments GmbH, 37077 Göttingen (DE)
(72) Erfinder: SCHMIDT, Roman, 37077 Göttingen (DE)
(74) Vertreter: Günther, Constantin
(86) Internationale Anmeldenummer: PCT/EP2024/066588
(87) Internationale Veröffentlichungsnummer: WO 2024/260872

(56) Entgegenhaltungen:
- EP-A1- 4 075 180
- EP-A1- 4 099 626
- WO-A1-2021/122407
- DE-A1- 102019 108 815
- DE-B3- 102020 127 320

## Beschreibung

Die Erfindung betrifft ein Verfahren zur Lokalisierung und/oder zum Verfolgen von Emittern in einer Probe, bei dem die Probe über einen definierten räumlichen Bereich mit einem Beleuchtungslicht bestrahlt wird, das über den definierten räumlichen Bereich ein lokales Lichtintensitätsminimum und um das Lichtintensitätsminimum herum angeordnete lokale Lichtintensitätsmaxima hat, wobei
a) das lokale Lichtintensitätsminimum an verschiedenen Stellen um eine Schätzposition eines einzelnen Emitters herum platziert wird und jeweils eine vom Emitter abgestrahlte Lichtmenge, insbesondere eine vom Emitter als Reaktion auf das Beleuchtungslicht abgestrahlte Lichtmenge, aufgenommen und als Datensatz gespeichert wird,
b) wobei aus Daten der aufgenommenen Lichtmengen eine verbesserte Schätzposition des Emitters bestimmt wird.

Mittels der auf diese Weise verbesserten Schätzposition kann ein jeweiliger Emitter in der Probe lokalisiert und/oder verfolgt werden, d. h. ein Tracking eines jeweiligen Emitters wird möglich. Die Ergebnisse der Lokalisierung und/oder Verfolgung des Emitters können beispielsweise auf einem Anzeigegerät angezeigt werden. Durch das Beleuchtungslicht können die Emitter in der Probe zur Emission von Licht anregt oder die Emission von Licht durch die Emitter verhindert oder verringert werden.

Im Schritt a) kann das Intensitätsminimum an verschiedenen Stellen, die insgesamt um die Schätzposition herum liegen, platziert werden, beispielsweise auf einem Sechseck, das die Schätzposition umgrenzt. Es ist auch möglich, dass das lokale Lichtintensitätsminimum mehrfach an jede einzelne Stelle platziert wird, beispielsweise, indem das Sechseck mehrfach abgetastet wird.

Die Erfindung betrifft außerdem ein Computerprogramm zur Durchführung des Verfahrens der zuvor erläuterten Art.

Die Erfindung betrifft außerdem ein Lichtmikroskop zur Lokalisation und/oder zum Verfolgen von Emittern in einer Probe mit:
- einer Beleuchtungsvorrichtung zum Bestrahlen der Probe mit Beleuchtungslicht über einen definierten räumlichen Bereich, wobei das Beleuchtungslicht über den definierten räumlichen Bereich ein lokales Lichtintensitätsminimum und um das Lichtintensitätsminimum herum angeordnete lokale Lichtintensitätsmaxima hat, und wobei das Beleuchtungslicht die Emitter in der Probe zur Emission von Licht anregt oder die Emission von Licht durch die Emitter verhindert,
- einer Lichterfassungsvorrichtung zum Erfassen von von den Emittern abgestrahlten Lichtmengen,
- einer Steuereinrichtung zum Steuern der Position des Lichtintensitätsminimums des Beleuchtungslichts der Beleuchtungsvorrichtung,
- eine Auswerteeinrichtung zum Speichern und Auswerten von Datensätzen der mittels der Lichterfassungseinrichtung aufgenommenen, von den Emittern abgestrahlten Lichtmengen.

Unter Emittern werden in dieser Anmeldung Objekte verstanden, die, wenn sie mit Anregungslicht beleuchtet werden, mit Blick auf die erfindungsgemäßen Messungen als Punktlichtquellen betrachtet werden können. Das von dem Objekt, das als Punktlichtquelle wirkt, ausgehende Licht kann beispielsweise Streulicht sein, das aus einer elastischen Streuung wie beispielsweise einer Rayleigh-Streuung oder einer unelastischen Streuung wie beispielsweise einer Raman-Streuung resultiert oder es kann Lumineszenzlicht, insbesondere Fluoreszenzlicht, sein. Wesentlich für einen Emitter ist, dass von ihm als Reaktion auf das Beleuchten sofort oder mit kleiner Zeitverzögerung Licht ausgeht. Hierbei steht die maximale Zeitverzögerung dann, wenn Bewegungen des Emitters verfolgt werden sollen, in einer Beziehung zu der zeitlichen Auflösung, mit der die Bewegungen der Licht emittierenden Partikel oder Licht emittierenden Einheiten verfolgt werden sollen, und mit der Geschwindigkeit, mit der sich die Partikel oder Einheiten in der Probe bewegen. Die Zeitverzögerungen können bis etwa 10 µs betragen, liegen in der Regel aber im Bereich bis zu einigen zehn Nanosekunden, häufig im Bereich von 1 bis 10 ns und, wenn die Emission Streulicht ist, bei Null. Emitter können beispielsweise metallische Nanopartikel oder Fluoreszenzemitter sein. Unter den spezielleren Begriff Fluoreszenzemitter fallen zum Beispiel einzelne Fluoreszenzfarbstoffmoleküle oder deren fluoreszierende chemische Gruppen. Anstelle von Farbstoffen können auch andere fluoreszierende Einheiten wie zum Beispiel *Quantum Dots* oder aufwärtskonvertierende Nanopartikel zur Markierung verwendet werden. Im Kontext der Anmeldung wird dementsprechend unter Anregungslicht nicht nur Fluoreszenzanregungslicht verstanden, sondern allgemein solches Licht, das bewirkt, dass von einem Emitter Licht ausgeht.

Allgemein betrifft die Erfindung das Gebiet der Lichtmikroskopie, z.B. der Laser-Scanning-Mikroskopie. Insbesondere betrifft die Erfindung abtastende Verfahren und Vorrichtungen der Lokalisationsmikroskopie, bei denen die Abtastung mit einem fokussierten Beleuchtungslicht, insbesondere einem fokussierten Anregungslicht erfolgt, wobei der Fokus des Beleuchtungslichts ein zentrales Intensitätsminimum aufweist. Solche Verfahren sind im Stand der Technik als MINFLUX-Verfahren bekannt. Der Begriff MINFLUX wird in der Veröffentlichung "Nanometer resolution imaging and tracking of fluorescent molecules with minimal photon fluxes" (Balzarotti, F. et al,.Science. 2017 Feb 10;355(6325):606-612. doi: 10.1126/science.aak9913. Epub 2016 Dec 22. PMID: 28008086.) eingeführt. Ein bekanntes Lichtmikroskop geht z.B. aus der DE 10 2021 116 504 A1 hervor. Aus der WO 2021/122407 A1 geht ein Verfahren zur Störungskorrektur und ein Laserscanningmikroskop mit Störungskorrektur hervor.

Der Erfindung liegt die Aufgabe zugrunde, die Lokalisation und/oder Verfolgung von Emittern in einer Probe bei der Lichtmikroskopie weiter zu verbessern.

Diese Aufgabe wird mit einem Verfahren gemäß Anspruch 1 gelöst. Dies beinhaltet, dass bei der Aufnahme der Lichtmengen und Abspeicherung der Datensätze in den zuvor genannten Schritten Verläufe der von einzelnen Emittern empfangenen Lichtmenge über die Zeit als Lichtsignalfolgen gespeichert werden, wobei parallel zu der Aufnahme der Lichtmengen oder in einem zusätzlich zu den zuvor genannten Schritten a), b) vorgenommenen Beleuchtungsschritt Metadaten bestimmt werden, und wobei die Metadaten zur Zuordnung mindestens einer Lichtsignalfolge zu einer jeweiligen Markierungsposition der Probe und/oder einem jeweiligen Emitter verwendet werden. Auf diese Weise können mit geringem Aufwand und ohne eine Verlängerung oder zumindest allenfalls mit geringer Verlängerung der Belichtungsschritte zusätzliche Daten generiert werden, nämlich die Metadaten, durch die die Lokalisierung und/oder das Verfolgen der Emitter in der Probe weiter optimiert werden kann. Insbesondere wird es möglich, durch die Metadaten auf einfache Weise eine Zuordnung von zeitlich nacheinander auftretenden Lichtsignalfolgen zu demselben Emitter bzw. zu derselben Markierungsposition der Probe durchzuführen.

Das erfindungsgemäße Verfahren erlaubt ein definiertes Lokalisieren und/oder Verfolgen von Emittern in einer Probe. Das erfindungsgemäße Verfahren unterscheidet sich von herkömmlichen MINFLUX-Verfahren dadurch, dass durch Zuordnung von Lichtemissionen zu Markierungspositionen und/oder Emittern die Lokalisation und/oder das Tracking verbessert wird, z.B. durch höhere Lokalisationsgenauigkeit, Vermeidung von Pseudo-Mehrfachlokalisationen, potentiell längere Trajektorien beim Tracking (wiedergefundene Emitter) und/oder Zusatzinformation (z.B. chemische Karten).

Durch das erfindungsgemäße Zuordnen mindestens einer Lichtsignalfolge zu einer jeweiligen Markierungsposition der Probe und/oder einem jeweiligen Emitter kann eine Art "Fingerprinting" einzelner Emitter bzw. der jeweiligen Markierungspositionen durchgeführt werden.

Bei den Schritten a), b) kann ein zusätzlicher Beleuchtungsschritt hinzugefügt werden, z.B. vor dem Schritt a), bei dem das lokale Lichtintensitätsminimum an einer Stelle der Probe platziert wird, die der Schätzposition eines einzelnen Emitters entspricht, und eine vom Emitter abgestrahlte Lichtmenge aufgenommen und als Datensatz gespeichert werden. Dieser Datensatz kann dann ebenfalls für die Bestimmung der verbesserten Schätzposition des Emitters herangezogen werden.

Eine anfängliche Schätzposition eines Emitters kann beispielsweise mittels bekannten Lokalisationsmikroskopieverfahren, z.B. PALM, STORM, Rasterscanning, Pinhole-Orbit-Scanning, Abtasten mit einem gaußförmigen Fokus auf einem Beleuchtungsmuster erfolgen, und/oder mittels anderer bekannter Verfahren.

Gemäß einer vorteilhaften Ausgestaltung der Erfindung ist vorgesehen, dass bei der Aufnahme der Lichtmengen und Abspeicherung der Datensätze in den zuvor genannten Schritten der Verlauf der vom einzelnen Emitter empfangenen Lichtmenge über die Zeit als Lichtsignalfolge gespeichert und ausgewertet wird und hieraus Metadaten bestimmt werden. Somit kann der Zeitverlauf der vom einzelnen Emitter empfangenen Lichtmenge während eines Beleuchtungsvorgangs vorteilhaft genutzt werden, um hieraus zusätzliche Daten für die Auswertung zu erzeugen, nämlich einige oder alle Metadaten. Für die Auswertung kann z.B. eine Spektralanalyse oder eine sonstige zeitlich hochaufgelöste Auswertung durchgeführt werden, z.B. um Fluktuationskennzahlen zu bestimmen.

Gemäß einer vorteilhaften Ausgestaltung der Erfindung ist vorgesehen, dass bei dem zusätzlichen Beleuchtungsschritt jeweils eine von dem Emitter abgestrahlte Lichtmenge aufgenommen und auf Basis der Lichtmenge ein zusätzlicher Datensatz gespeichert wird und aus dem zusätzlichen Datensatz die Metadaten bestimmt werden. Dies ermöglicht es, noch weitere Daten für die Lokalisierung oder Verfolgung von Emittern bereitzustellen. Beispielsweise bei "spektralen" Metadaten (z.B. durch ratiometrische Detektion erfasst) ist es denkbar, Lichtmengen zu erfassen, das Verhältnis zwischen in den Detektionskanälen erfassten Lichtemissionen zu bilden, und das erhaltene Verhältnis zu speichern. Im Fall einer ratiometrischen Detektion können die in verschiedenen Detektionskanälen erhaltenen Lichtmengen zunächst gespeichert werden oder es kann direkt (z.B. in einem FPGA) das Verhältnis gebildet werden.

Gemäß einer vorteilhaften Ausgestaltung der Erfindung ist vorgesehen, dass bei dem zusätzlichen Beleuchtungsschritt das lokale Lichtintensitätsminimum an einer einzigen festen Stelle in der Probe platziert wird, die von der Schätzposition des einzelnen Emitters beabstandet ist. Auf diese Weise können besonders zügig aussagefähige zusätzliche Datensätze erzeugt werden. Dadurch, dass die Position des Lichtintensitätsminimums von der Schätzposition beabstandet ist, wird erreicht, dass auch dann ein ausreichendes Lichtsignal zur Bestimmung der Metadaten erhalten wird, wenn die Schätzposition bereits gut mit der tatsächlichen Emitterposition übereinstimmt. Ein solcher zusätzlicher Beleuchtungsschritt kann auch mehrfach durchgeführt werden, wobei dann zwischen den einzelnen zusätzlichen Beleuchtungsschritten die Positionierung des lokalen Lichtintensitätsminimums variiert wird.

Gemäß einer vorteilhaften Ausgestaltung der Erfindung ist vorgesehen, dass die Schritte a) und b) des Anspruchs 1 iterativ bis zu einer Abbruchgrenze wiederholt werden und dabei jeweils eine verbesserte Schätzposition des Emitters bestimmt wird. Hierdurch kann die Erfassungsgenauigkeit bei der Lokalisation und/oder Verfolgung der Emitter in der Probe weiter verbessert werden. Die Abbruchgrenze könnte z.B. ein vorgegebenes "Photonenbudget" bzw. eine vorgegebene Lokalisationspräzision sein oder die Abbruchgrenze könnte das irreversible Bleichen des Emitters oder der Übergang in einen Dunkelzustand sein.

Gemäß einer vorteilhaften Ausgestaltung der Erfindung ist vorgesehen, dass das Erzeugen der Metadaten in dem iterativen Vorgang ausgeführt wird. Dementsprechend kann die Erzeugung der Metadaten in den Erfassungsalgorithmus gut integriert werden, ohne den Aufwand bei den Beleuchtungsschritten weiter zu erhöhen. Zudem kann das aus den Metadaten gewonnene Wissen, also die Zuordnung von Lichtsignalfolgen zu Emittern, iterativ verbessert werden.

Gemäß der Erfindung ist vorgesehen, dass anhand der Metadaten die Datensätze von zeitlich beabstandet auftretenden Lichtabstrahlungen von Emittern miteinander korreliert werden und damit die Genauigkeit bei der Bestimmung der verbesserten Schätzposition des Emitters erhöht wird und/oder die Datensätze derselben Markierungsposition oder demselben Emitter zugeordnet werden. Zur Erhöhung der Genauigkeit trägt bei, dass aufgrund der Zuordnung mehrerer Lichtsignalfolgen zu einer Lokalisation (Emitter bzw. Markierungsposition) mehr Photonen für diese Lokalisation genutzt werden können. Diese Datensätze können z.B. jeweils Lokalisationsdaten eines jeweiligen Emitters und zugeordnete Metadaten enthalten. Die erwähnten zeitlich beabstandet auftretenden Lichtabstrahlungen von Emittern können Lichtabstrahlungen desselben Emitters sein, wenn dieser z.B. in einen reversiblen Dunkelzustand übergeht und dann wieder in den emittierenden Zustand zurückkehrt. Es können aber auch z.B. bei einem PAINT-Verfahren die Lichtabstrahlungen verschiedener Emitter sein, die nacheinander an dieselbe Markierungsposition binden. Insbesondere im letztgenannten Fall können mit dem erfindungsgemäßen Verfahren selbst Lichtabstrahlungen derselben Markierungsposition einander zugeordnet werden, die wesentlich größere Zeitabstände aufweisen, als sogenannte Bursts eines Emitters, beispielsweise im Millisekunden-, Sekunden- oder sogar Minutenbereich. Da insbesondere auf solchen langen Zeitskalen Störungen und Drifts einen besonders großen Einfluss auf die Lokalisation haben, ist eine ausreichende Probenstabilisierung bzw. Driftkorrektur sicherzustellen. Entsprechende Verfahren sind im Stand der Technik beschrieben (siehe z.B. WO 2022/200549 A1).

Gemäß einer vorteilhaften Ausgestaltung der Erfindung ist vorgesehen, dass einer, mehrere oder alle Emitter als Fluoreszenzemitter ausgebildet ist. Ein jeweiliger Emitter kann z.B. als Fluoreszenzfarbstoffmolekül und/oder fluoreszierende chemische Gruppe eines Fluoreszenzfarbstoffmoleküls ausgebildet sein. Dabei beinhaltet der Begriff Fluoreszenzfarbstoffmolekül auch fluoreszente Proteine inklusive reversibel schaltbarer fluoreszenter Proteine.

Gemäß einer vorteilhaften Ausgestaltung können die Markierungspositionen sogenannte Docking-Strands sein, an die komplementäre Imager-Strands transient binden können. In diesem Fall sind die abzubildenden (biologischen) Strukturen/ist die abzubildende Struktur (jeweils) mit für die Struktur spezifischen Docking-Strands markiert. Im Zusammenhang mit der Erfindung kann z.B. jede abzubildende Struktur bevorzugt mit für die Struktur spezifischen Docking-Strands markiert werden, wobei die Docking-Strands untereinander nicht identisch sind, aber alle derart ausgebildet sind, dass sie komplementär zu den untereinander identischen Imager-Strands sind. Komplementär bedeutet in diesem Zusammenhang, dass die Strands, d.h. Docking-Strand und Imager-Strand, eine transiente Bindung eingehen können. Dadurch, dass die Docking-Strands, mit denen eine Struktur markiert ist, untereinander nicht identisch sind, d.h. jeweils modifiziert sind, wird erreicht, dass anhand der Metadaten die Bindestellen leichter identifizierbar werden, weil sich die Unterschiede der Docking-Strands auf die Fluoreszenz (z.B. Spektrum, Fluoreszenzlebensdauer) auswirken.

Solche Strands können z.B. kurze farbmarkierte einsträngige DNA-Sequenzen (ssDNA - single stranded DNA) sein, die sich transient an ihre komplementären Strukturen binden können.

Gemäß einer vorteilhaften Ausgestaltung der Erfindung ist vorgesehen, dass mehrere oder alle Emitter untereinander zu derselben Spezies gehören. In diesem Fall sind die einzelnen Emitter, die untereinander zu derselben Spezies gehören, in einer einheitlichen Umgebung nicht voneinander unterscheidbar. Dabei müssen nicht die jeweils gesamten Systeme aus Imager-Strand und Emitter untereinander identisch sein, sondern nur die Emitter, insbesondere in dem Fall, dass transient bindende Emitter verwendet werden, wobei anhand der aufgenommenen Metadaten jeweils eine jeweilige Markierungsposition zugeordnet wird.

Gemäß einer vorteilhaften Ausgestaltung der Erfindung ist vorgesehen, dass zur Bestimmung von Metadaten einer, mehrere oder alle der folgenden Schritte durchgeführt werden:
a) ratiometrische Detektion von Lichtmengen eines Emitters:
   Eine ratiometrische Detektion kann z.B. die Detektion/Registrierung von Lichtemissionen in zwei spektral unterschiedlichen Detektionskanälen sein, wobei ein Verhältnis zwischen den in den jeweiligen Detektionskanälen erfassten Lichtintensitäten oder Photonencounts gebildet wird. Dieses Verhältnis kann Informationen sowohl über das Anregungsspektrum als auch über das Emissionsspektrum einzelner Emitter liefern. Emitter mit unterschiedlichen Anregungs- und/oder Emissionsspektren können so aufgrund ihres charakteristischen Verhältnisses unterschieden werden.
b) Auswertung von Emissionswellenlängencharakteristika oder Anregungswellenlängencharakteristika von Lichtmengen eines Emitters:
   Spektrale Information kann z.B. auch aus Emissionen, die kürzerwellig als die Anregungswellenlänge sind (Anti-Stokes), gewonnen werden.
c) Auswertung von Lebensdauerinformationen eines Emitters:
   Hierzu kann eine gepulste Anregung (gepulstes Beleuchtungslicht) und eine zeitaufgelöste Detektion (z.B. Gating oder TCSPC-Modul) verwendet werden.
d) zeitlich hochaufgelöste Bestimmung von Signalcharakteristika der Lichtsignalfolgen, insbesondere Fluktuationskennzahlen, z.B. durch statistische Auswertung. Beispielsweise könnten durch statistische Auswertung, z.B. über ein Hidden Markov Model, für einzelne Emitter oder Markierungsstellen charakteristische Folgen von emittierenden Zuständen und Dunkelzuständen oder charakteristische mittlere Emissionsraten von Emittern ermittelt und als Metadaten für das Fingerprinting verwendet werden.

Diese Schritte haben allgemein gesagt den Vorteil, dass aus den aufgenommenen Datensätzen Metadaten mit unterschiedlicher Aussagekraft erzeugt werden können, sodass anhand der Metadaten je nach Art der Probe und der verwendeten Emitter jeweils gewünschte Zuordnungen von Datensätzen erfolgen können, um die Lokalisation und/oder das Verfolgen von Emittern in der Probe weiter zu optimieren.

Gemäß einer vorteilhaften Ausgestaltung der Erfindung ist vorgesehen, dass anhand der Metadaten eine, mehrere oder alle der folgenden Schritte durchgeführt werden:
a) Erkennung eines Hintergrunds und Minimierung des Einflusses des erkannten Hintergrunds auf die Zuordnung der mindestens einen Lichtsignalfolge zu einer jeweiligen Markierungsstelle der Probe oder einem jeweiligen Emitter,
b) Generieren einer, insbesondere zeitaufgelösten, chemischen Karte der Probe aus den Metadaten,
c) Identifikation eines Emitters, der während eines Verfolgens des Emitters verloren wurde,
d) Anpassen von Probenparametern, um das Emissionsverhalten der Emitter zu verbessern.

Hierdurch kann die Lokalisation und/oder das Verfolgen von Emittern in einer Probe weiter verbessert werden.

Gemäß einer vorteilhaften Ausgestaltung der Erfindung ist vorgesehen, dass auf einem visuellen Benutzerinterface dem Benutzer unter Verwendung der Metadaten eine Zwischenauswertung der aufgenommenen Datensätze dargestellt wird. Dies hat den Vorteil, dass der Benutzer die weitere Auswertung der Datensätze anhand seiner Eingaben mit beeinflussen kann, sodass die Ergebnisse des erfindungsgemäßen Verfahrens durch Kenntnisse des Benutzers weiter optimiert werden können. Das visuelle Benutzerinterface kann z.B. auf einem Bildanzeigegerät angezeigt werden.

Gemäß einer vorteilhaften Ausgestaltung der Erfindung ist vorgesehen, dass dem Benutzer auf dem visuellen Benutzerinterface eine Zwischenauswertung der aufgenommenen Datensätze dargestellt wird, in der einzelne Messergebnisse in den Datensätzen in einer zweidimensionalen Darstellung wiedergegeben werden, in der Metadaten über eine räumliche Koordinate der Probe aufgetragen sind. Hierdurch wird ein einfach und intuitiv zu benutzendes Benutzerinterface für die Nutzung der Metadaten bereitgestellt.

Gemäß einer vorteilhaften Ausgestaltung der Erfindung ist vorgesehen, dass das Benutzerinterface eine Eingabemöglichkeit für den Benutzer hat, mit der der Benutzer anhand einer manuellen Auswahl von Metadaten die weitere Auswertung der aufgenommenen Datensätze einstellen kann, insbesondere mittels einer manuellen Auswahl direkt in der visuellen Darstellung der Metadaten in dem visuellen Benutzerinterface. Beispielsweise kann die manuelle Auswahl von Metadaten in einer graphischen Darstellung erfolgen, in der der Benutzer direkt die gewünschten auszuwählenden Metadaten mit einem Bedienelement, z.B. einer Maus, anklicken kann.

Die eingangs genannte Aufgabe wird außerdem mit einem Computerprogramm mit Programmcodemitteln gelöst, die auf einem maschinenlesbaren Träger gespeichert sein können, eingerichtet zur Durchführung des Verfahrens der zuvor erläuterten Art, wenn das Computerprogramm auf einem Rechner ausgeführt wird. Auch hierdurch können die zuvor erläuterten Vorteile realisiert werden. Der Rechner kann als handelsüblicher Computer ausgebildet sein, z.B. als PC, Laptop, Notebook, Tablet oder Smartphone, oder als Mikroprozessor, Mikrocontroller oder FPGA, oder als Kombination aus solchen Elementen.

Die eingangs genannte Aufgabe wird außerdem mit einem Lichtmikroskop der eingangs genannten Art gelöst, bei dem die Auswerteeinrichtung des Lichtmikroskops zur Bestimmung der Metadaten und Zuordnung mindestens einer Lichtsignalfolge zu einer jeweiligen Markierungsposition der Probe und/oder einem jeweiligen Emitter gemäß einem Verfahren der zuvor erläuterten Art eingerichtet ist. Auch hierdurch können die zuvor erläuterten Vorteile realisiert werden. Die Auswerteeinrichtung kann z.B. einen Rechner haben, der das zuvor erwähnte Computerprogramm ausführt.

Gemäß einer vorteilhaften Ausgestaltung der Erfindung ist vorgesehen, dass das Lichtmikroskop ein visuelles Benutzerinterface hat, wobei die Auswerteeinrichtung dazu eingerichtet ist, dem Benutzer auf dem visuellen Benutzerinterface unter Verwendung der Metadaten eine Zwischenauswertung der aufgenommenen Datensätze darzustellen. Dies hat den Vorteil, dass der Benutzer die weitere Auswertung der Datensätze anhand seiner Eingaben mit beeinflussen kann, sodass die Ergebnisse des erfindungsgemäßen Verfahrens durch Kenntnisse des Benutzers weiter optimiert werden können.

Die Erfindung wird nachfolgend anhand von Ausführungsbeispielen unter Verwendung von Zeichnungen näher erläutert.

Es zeigen
- Figur 1: ein Lichtmikroskop in schematischer Darstellung,
- Figur 2: einen Ablauf bei der Durchführung einer Lichtmikroskopie,
- Figur 3: eine Bestimmung von Metadaten,
- Figur 4: ein visuelles Benutzerinterface.

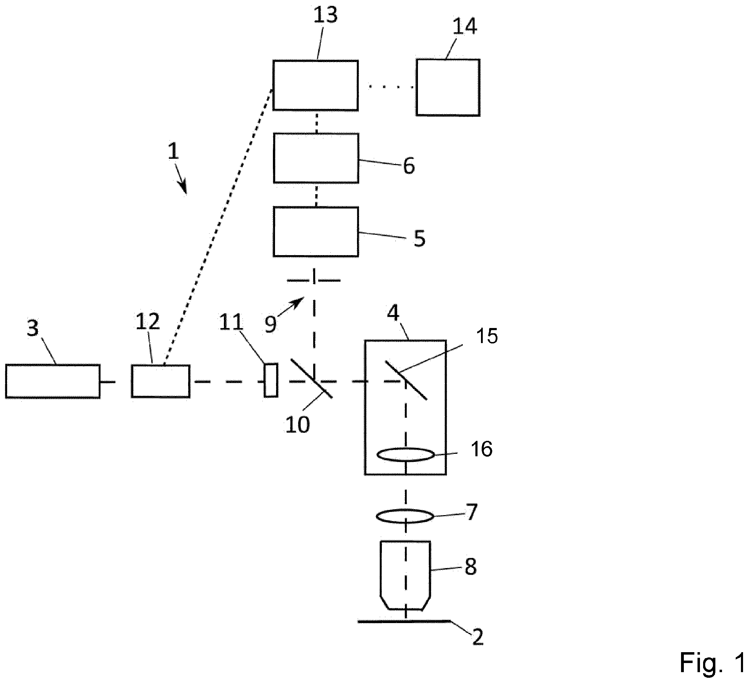

Die Figur 1 zeigt eine Ausführungsform einer erfindungsgemäßen Vorrichtung umfassend ein Lichtmikroskop 1 und einen Prozessor 6, die zur Durchführung eines MINFLUX-Mikroskopie-Verfahrens ausgebildet ist.

Das Lichtmikroskop 1 weist als Beleuchtungsvorrichtung eine Lichtquelle 3 zur Erzeugung von Beleuchtungslicht in Form von Anregungslicht auf. Das Anregungslicht durchläuft eine Strahlablenkeinheit 12 (z.B. einen oder mehrere elektrooptische Deflektoren) und einen Phasenmodulator 11, insbesondere einen programmierbaren *spatial light modulator,* zur Phasenmodulation des Anregungslichts, so dass am Fokus in der Probe 2 eine Anregungslichtverteilung mit einem lokalen Intensitätsminimum, z.B. eine Donut-Verteilung, entsteht. Das Anregungslicht wird von dem dichroitischen Spiegel 10 transmittiert und gelangt über einen Scanner 4 mit Scan-Spiegel 15 und Scan-Linse 16 und eine Tubuslinse 7 zu einem Objektiv 8, das das Anregungslicht in die Probe 2 fokussiert. Das von Emittern in der Probe 2 ausgehende Emissionslicht wird von dem dichroitischen Spiegel 10 reflektiert und gelangt über eine optionale konfokale Lochblende 9 zu einem photonenzählenden Detektor 5, der eine Lichterfassungsvorrichtung bildet. Der Detektor 5 ist mit einem Prozessor 6 verbunden, der wiederum mit einer Steuereinrichtung 13 verbunden ist.

Die Steuereinrichtung 13 steuert die Strahlablenkeinheit 12 so, dass das Minimum der Anregungslichtverteilung am Fokus nacheinander an Positionen eines Beleuchtungsmusters um eine vermutete Position eines einzelnen Emitters in der Probe 2 positioniert wird. Für jede Position wird mittels des Detektors 5 eine Anzahl von detektierten Photonen ermittelt. Der Prozessor 6, der eine Auswerteeinrichtung bildet, berechnet dann aus den Photonenanzahlen und den zugeordneten Positionen eine neue Positionsschätzung für den einzelnen Emitter. Dieses Verfahren kann iterativ durchgeführt werden, z.B. bis die Lokalisierungsgenauigkeit gegen einen Grenzwert konvergiert oder bis der Emitter aufhört, Licht zu emittieren. Der Vorgang kann dann für weitere Emitter wiederholt werden. Anschließend kann der Prozessor 6 auf Basis einer Vielzahl von Einzelmolekül-Lokalisationen ein erstes Bild B1 errechnen, das die Verteilung mehrerer Emitter in der Probe 2 darstellt.

Der Prozessor 6 kann zudem dazu eingerichtet sein, weitere Schritte des erfindungsgemäßen Verfahrens auszuführen, z.B. die Metadaten zu bestimmen und anhand der Metadaten Lichtsignalfolgen des Emissionslichts einzelnen Emittern oder Markierungspositionen zuzuordnen. Der Prozessor 6 kann z.B. als Rechner im zuvor erläuterten Sinne erläuterten Sinne ausgebildet sein oder einen solchen Rechner aufweisen.

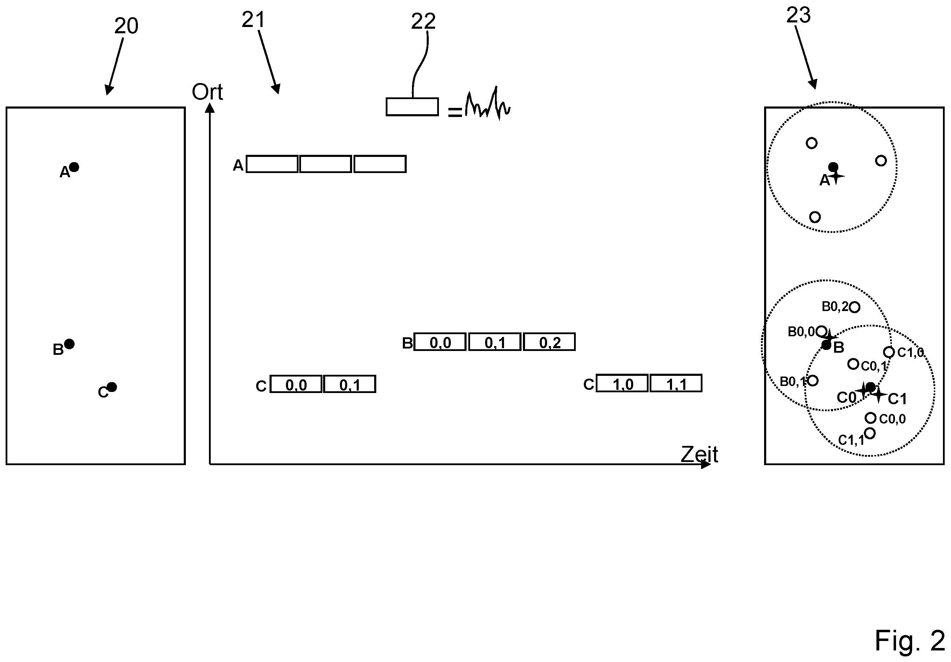

Die Figur 2 illustriert die Lokalisation mehrerer Emitter gemäß einem aus dem Stand der Technik bekannten MINFLUX-Verfahren. Sie zeigt im Bereich 20 die tatsächlichen Positionen dreier Emitter A, B, C in einer Probe. In den Bereichen 21 und 23 wird die Lokalisation der drei Emitter A, B, C illustriert. Für den Emitter A werden in unmittelbarer zeitlicher Abfolge drei Lichtsignalfolgen 22 erhalten, die vereinfacht jeweils als ein rechteckiger Block dargestellt sind. Aus jeder der drei Lichtsignalfolgen wird eine Schätzung für die Position des Emitters A erhalten. Die einzelnen geschätzten Positionen sind im Bereich 23 oben als kleine Kreise dargestellt, zusammen mit der tatsächlichen, aber unbekannten Lage des Emitters A, die als schwarze Kreisfläche eingetragen ist. Aus den drei einzelnen Schätzungen wird eine Gesamtschätzung der Position des Emitters A bestimmt. Diese ist als Stern eingezeichnet.

Entsprechend wird der Emitter B lokalisiert. Die einzelnen Lichtsignalfolgen sind für den Emitter B mit (0,0), (0,1) und (0,2) indiziert. Die jeweils zughörigen einzelnen Schätzpositionen im Bereich 23 sind entsprechend indiziert.

Für den Emitter C werden nun in zwei voneinander getrennten Zeiträumen jeweils zwei einzelne zeitlich unmittelbar aufeinanderfolgende Lichtsignalfolgen 22 erhalten, die mit (0,0) und (0,1) für das erste Paar und mit (1,0) und (1,1) für das zweite Paar indiziert sind. Im Bereich 23 sind nun alle einzelnen Schätzwerte als kleine Kreise mit zugehöriger Indizierung dargestellt. Aus den Schätzwerten des ersten Paares (0,0), (0,1) wird eine erste Gesamtschätzung der Position des Emitters C bestimmt, die als Sternchen mit der Bezeichnung C0 im Bereich 23 dargestellt ist. Entsprechend wird aus den Schätzwerten des zweiten Paares (1,0), (1,1) eine zweite Gesamtschätzung der Position des Emitters C bestimmt, die als Sternchen mit der Bezeichnung C1 im Bereich 23 dargestellt ist. Eine Zuordnung der geschätzten Positionen C0 und C1 zu ein und demselben Emitter C kann im Stand der Technik nicht erfolgen, vielmehr erscheint die Probe in der Abbildung, als wiese sie vier Emitter A, B, C0 und C1 auf. Typischerweise werden die Lichtsignalfolgen 22 für die Emitter A, B und C nacheinander erhalten. Daher beziehen sich die Positionen der Lichtsignalfolgen 22 auf der Zeitachse insbesondere auf unterschiedliche Nullpunkte (Referenzzeitpunkte). Mit bestimmten Varianten des Verfahrens kann es jedoch auch möglich sein, die Lichtsignalfolgen 22 für die Emitter A, B und C parallel oder zeitlich überlappend aufzunehmen.

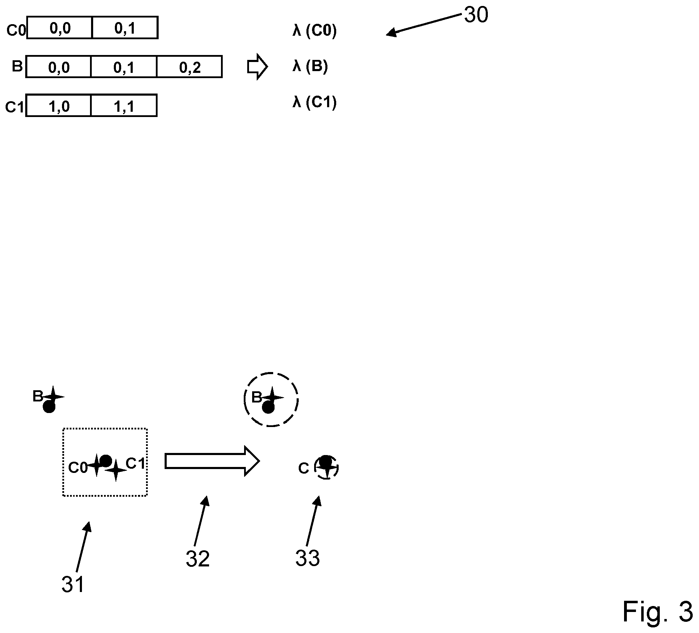

Figur 3 illustriert nun eine erfindungsgemäße Lösung. Wie in Figur 3 erkennbar ist, werden in einem Schritt 30 erfindungsgemäß aus den aufgenommenen Datensätzen, die über die Zeit als Lichtsignalfolgen gespeichert werden, Metadaten λ(C0), λ(B) und λ(C1) bestimmt. Unter Verwendung der Metadaten erfolgt in einem Schritt 31 zunächst eine Zuordnung von zeitlich getrennten Emissionsteilspuren C0, C1 zueinander. In einem Schritt der Aggregation 32 wird dann eine verbesserte aktuelle Schätzposition 33 des Emitters C bestimmt, sodass dieser besser lokalisiert und/oder verfolgt werden kann. Im Unterschied zu dem anhand der Figur 2 erläuterten Verfahren kann somit eine verbesserte aktuelle Schätzposition 33 des einzelnen Emitters C aus allen vier Lichtsignalfolgen (0,0), (0,1), (1,0), (1,1) bestimmt werden.

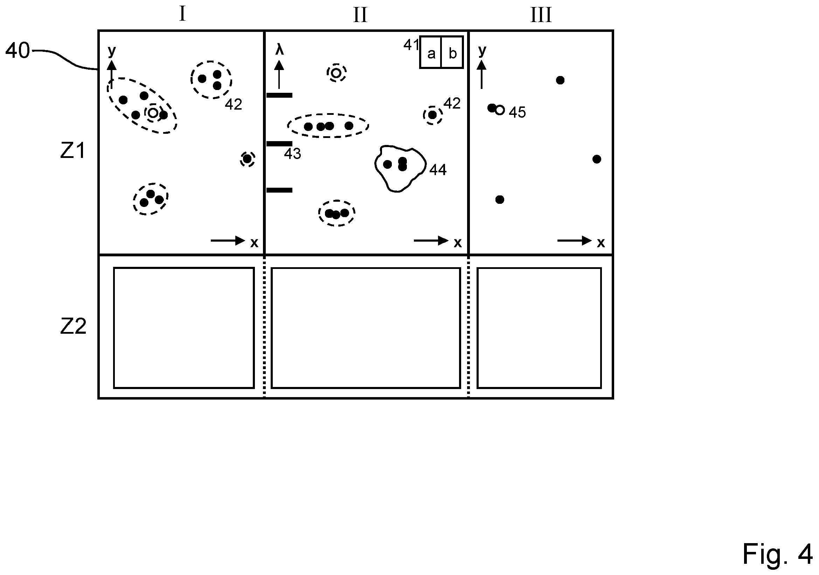

Die Figur 4 zeigt ein visuelles Benutzerinterface 40, auf dem dem Benutzer unter Verwendung der Metadaten λ eine Zwischenauswertung der aufgenommenen Datensätze dargestellt werden kann. Das Benutzerinterface kann z.B. als graphisches Benutzerinterface (GUI) ausgebildet sein. Das Benutzerinterface kann als Darstellung einer zunächst vollautomatischen Funktion konzipiert sein, wobei dem Benutzer das Endergebnis sowie Ergebnisse und Gründe für die vorgeschlagenen Detail-Operationen angezeigt werden. Diese kann der Benutzer beispielsweise mittels einer Eingabe, z.B. einem Mausklick, übernehmen oder interaktiv anpassen.

Das Benutzerinterface 40 ist nach Art einer Matrix aufgeteilt, die beispielsweise zwei übereinander angeordnete Zeilen Z1, Z2 und beispielsweise drei nebeneinander angeordnete Spalten I, II und III haben kann. Auf diese Weise werden sechs Darstellungsfelder gebildet, die folgende Inhalte und Funktionen haben können:
Spalte I: Rohdatenbereich:
   - Standard (=Dimensionen aus x,y,z,t) 2D/3D Darstellung der Rohdaten
   - aktuelle Zuordnungen 42 werden angezeigt
   - dient dazu, dem Benutzer eine Zuordnung der abstrakten Darstellung in Spalte II zu einer herkömmlichen Lokalisationskarte zu ermöglichen bzw. der Herstellung eines (visuellen) Rückbezuges der in den Spalten II und III dargestellten Informationen zu den Ausgangsdaten
Spalte II: Operationsbereich:
   - 2D/3D-Verortung der Spuren in ausgewählten Dimensionen aus Raum der Roh- und Metadaten
   - Darstellung/Festlegung von Cluster- und Filterkriterien (z.B. Schwellwerte 43, manuelle Zuordnungen durch z.B. Anklicken/Umrisszeichnung 44)
   - verkettete Cluster- und Filteroperationen a,b,... können konfiguriert werden, wobei das Ergebnis der vorausgehenden Operation als neue Quelle verwendet wird, Darstellung als multiple Bereiche vom Typ II und/oder Umschalten der Darstellung per GUI-Element
Spalte III: Ergebnisbereich:
   - Standard-2D/3D-Vorschau des Ergebnisses
   - Überblenden (z.B. Alphablending/Überlagern) mit Spalte I, um Wirkung der Operationen zu verdeutlichen
Zeile Z1: 2D/3D-Bereich:
   - Spuren werden durch Marker an entsprechenden Koordinaten in gewählten Raumdimensionen angezeigt
   - Marker 45 können mittels Form/Farbe/Größe ihre Koordinate in einer zusätzlichen Dimension darstellen
   - aktuelle Zuordnungen 42, 44 sowie Parameter wie Schwellwerte 3 werden angezeigt und können interaktiv angepasst werden
   - optional komprimierte Darstellung: Zeige nur solche Achsenintervalle, in denen die lokale Dichte der Datenpunkte einen Schwellwert (z.B. 0) überschreitet
Zeile Z2: Informations- und Kontrollbereich:
   - in diesem Bereich sind Eingaben des Benutzers möglich
   - Anzeige von Bereichs-I..III-spezifischen Statistiken (z.B. I: Nearest-Neighbour-Distances, Intensitäten, II: Metadaten/Fingerprints, III: mittlere Präzision nach Aggregation) in kondensierter Form (Text und/oder 1D-Histogramme)
   - I: Auswahl der zu generierenden Metadaten auf Basis des Datensatzes (mit Vorschlägen, z.B. Wellenlänge, wenn rat. Detektion zur Aufnahme verwendet wurde)
   - Kontrollen zur Einstellung der Operationsparameter (z.B. Wahl der Datenbasis für Clustering per Checkboxen, Slider zur Festlegung von Schwellwerten
   - Operationskontrollen wie OK / Apply / Cancel

## Patentansprüche

1. Verfahren zur Lokalisierung und/oder zum Verfolgen von Emittern (A, B, C) in einer Probe (2), bei dem die Probe (2) über einen definierten räumlichen Bereich (20, 23) mit einem Beleuchtungslicht bestrahlt wird, das über den definierten räumlichen Bereich (20, 23) ein lokales Lichtintensitätsminimum und um das Lichtintensitätsminimum herum angeordnete lokale Lichtintensitätsmaxima hat, wobei
a) das lokale Lichtintensitätsminimum an verschiedenen Stellen um eine Schätzposition (33) eines einzelnen Emitters (A, B, C) herum platziert wird und jeweils eine vom Emitter (A, B, C) abgestrahlte Lichtmenge aufgenommen und als Datensatz gespeichert wird,
b) wobei aus Daten der aufgenommenen Lichtmengen eine verbesserte Schätzposition (33) des Emitters (A, B, C) bestimmt wird,
wobei bei der Aufnahme der Lichtmengen und Abspeicherung der Datensätze in den zuvor genannten Schritten Verläufe der von einzelnen Emittern (A, B, C) empfangenen Lichtmenge über die Zeit als Lichtsignalfolgen (22) gespeichert werden, wobei parallel zu der Aufnahme der Lichtmengen oder in einem zusätzlich zu den zuvor genannten Schritten vorgenommenen Beleuchtungsschritt Metadaten (λ, λ(C0), λ(B), λ(C1)) bestimmt werden, und wobei die Metadaten (λ, λ(C0), λ(B), λ(C1)) zur Zuordnung mindestens einer Lichtsignalfolge (22) zu einer jeweiligen Markierungsposition der Probe (2) und/oder einem jeweiligen Emitter (A, B, C) verwendet werden, **dadurch gekennzeichnet, dass** anhand der Metadaten (λ, λ(C0), λ(B), λ(C1)) die Datensätze von zeitlich beabstandet auftretenden Lichtabstrahlungen von Emittern (A, B, C) miteinander korreliert werden und damit die Genauigkeit bei der Bestimmung der verbesserten Schätzposition (33) des Emitters (A, B, C) erhöht wird und/oder die Datensätze derselben Markierungsposition oder demselben Emitter (A, B, C) zugeordnet werden.

2. Verfahren nach Anspruch 1, **dadurch gekennzeichnet, dass** bei der Aufnahme der Lichtmengen und Abspeicherung der Datensätze in den zuvor genannten Schritten der Verlauf der vom einzelnen Emitter (A, B, C) empfangenen Lichtmenge über die Zeit als Lichtsignalfolge (22) gespeichert und ausgewertet wird und hieraus die Metadaten (λ, λ(C0), λ(B), λ(C1)) bestimmt werden.

3. Verfahren nach Anspruch 1 oder 2, **dadurch gekennzeichnet, dass** bei dem zusätzlichen Beleuchtungsschritt jeweils eine von dem Emitter (A, B, C) abgestrahlte Lichtmenge aufgenommen und auf Basis der Lichtmenge ein zusätzlicher Datensatz gespeichert wird und aus dem zusätzlichen Datensatz die Metadaten (λ, λ(C0), λ(B), λ(C1)) bestimmt werden.

4. Verfahren nach Anspruch 3, **dadurch gekennzeichnet, dass** bei dem zusätzlichen Beleuchtungsschritt das lokale Lichtintensitätsminimum an einer einzigen festen Stelle in der Probe (2) platziert wird, die von der Schätzposition (33) des einzelnen Emitters (A, B, C) beabstandet ist.

5. Verfahren nach einem der vorhergehenden Ansprüche, **gekennzeichnet durch** wenigstens eines der Merkmale i), ii), iii), iv), v), vi):
i) die Schritte a) und b) des Anspruchs 1 werden iterativ bis zu einer Abbruchgrenze wiederholt und dabei wird jeweils eine verbesserte Schätzposition (33) des Emitters (A, B, C) bestimmt,
ii) einer, mehrere oder alle Emitter (A, B, C) sind als Fluoreszenzemitter ausgebildet, insbesondere als Fluoreszenzfarbstoffmolekül, fluoreszierende chemische Gruppe eines Fluoreszenzfarbstoffmoleküls und/oder fluoreszentes Protein, insbesondere reversibel schaltbares fluoreszentes Protein,
iii) mehrere oder alle Emitter (A, B, C) gehören untereinander zu derselben Spezies,
iv) einer, mehrere oder alle Emitter (A, B, C) sind als Quantum Dot und/oder als aufwärtskonvertierendes Nanopartikel ausgebildet,
v) im Laufe des Verfahrens mikroskopisch zu visualisierende Elemente der Probe (2) werden mittels PAINT (Point Accumulation for Imaging in Nanoscale Topography) markiert,
vi) im Laufe des Verfahrens mikroskopisch zu visualisierende Elemente der Probe (2) werden mittels DNA-PAINT und/oder Exchange-PAINT markiert, insbesondere mit Emittern (A, B, C) unterschiedlicher Farbe.

6. Verfahren nach Anspruch 5, **dadurch gekennzeichnet, dass** im Merkmal i) das Erzeugen der Metadaten (λ, λ(C0), λ(B), λ(C1)) in dem iterativen Vorgang ausgeführt wird.

7. Verfahren nach Anspruch 5, **dadurch gekennzeichnet, dass** im Merkmal vi) für die Markierung Systeme aus Imager-Strand und Emitter verwendet werden, die untereinander identisch sind.

8. Verfahren nach einem der vorhergehenden Ansprüche, **dadurch gekennzeichnet, dass** zur Bestimmung von Metadaten (λ, λ(C0), λ(B), λ(C1)) einer, mehrere oder alle der folgenden Schritte durchgeführt werden:
a) ratiometrische Detektion von Lichtmengen eines Emitters (A, B, C),
b) Auswertung von Emissionswellenlängencharakteristika oder Anregungswellenlängencharakteristika von Lichtmengen eines Emitters (A, B, C),
c) Auswertung von Lebensdauerinformationen eines Emitters (A, B, C),
d) zeitlich hochaufgelöste Bestimmung von Signalcharakteristika der Lichtsignalfolgen (22), insbesondere Fluktuationskennzahlen, z.B. durch statistische Auswertung.

9. Verfahren nach einem der vorhergehenden Ansprüche, **dadurch gekennzeichnet, dass** anhand der Metadaten (λ, λ(C0), λ(B), λ(C1)) einer, mehrere oder alle der folgenden Schritte durchgeführt werden:
a) Erkennung eines Hintergrunds und Minimierung des Einflusses des erkannten Hintergrunds auf die Zuordnung der mindestens einen Lichtsignalfolge (22) zu einer jeweiligen Markierungsstelle der Probe (2) oder einem jeweiligen Emitter (A, B, C),
b) Generieren einer, insbesondere zeitaufgelösten, chemischen Karte der Probe (2) aus den Metadaten (λ, λ(C0), λ(B), λ(C1)),
c) Identifikation eines Emitters (A, B, C), der während eines Verfolgens des Emitters (A, B, C) verloren wurde,
d) Anpassen von Probenparametern, um das Emissionsverhalten der Emitter (A, B, C) zu verbessern.

10. Verfahren nach einem der vorhergehenden Ansprüche, **dadurch gekennzeichnet, dass** auf einem visuellen Benutzerinterface (40) dem Benutzer unter Verwendung der Metadaten (λ, λ(C0), λ(B), λ(C1)) eine Zwischenauswertung der aufgenommenen Datensätze dargestellt wird.

11. Verfahren nach Anspruch 10, **dadurch gekennzeichnet, dass** dem Benutzer auf dem visuellen Benutzerinterface (40) eine Zwischenauswertung der aufgenommenen Datensätze dargestellt wird, in der einzelne Messergebnisse in den Datensätzen in einer zweidimensionalen Darstellung wiedergegeben werden, in der Metadaten (λ, λ(C0), λ(B), λ(C1)) über eine räumliche Koordinate der Probe (2) aufgetragen sind.

12. Verfahren nach Anspruch 10 oder 11, **dadurch gekennzeichnet, dass** das Benutzerinterface (40) eine Eingabemöglichkeit für den Benutzer hat, mit der der Benutzer anhand einer manuellen Auswahl von Metadaten (λ, λ(C0), λ(B), λ(C1)) die weitere Auswertung der aufgenommenen Datensätze einstellen kann, insbesondere mittels einer manuellen Auswahl direkt in der visuellen Darstellung der Metadaten (λ, λ(C0), λ(B), λ(C1)) in dem visuellen Benutzerinterface (40).

13. Computerprogramm mit Programmcodemitteln, eingerichtet zur Durchführung des Verfahrens nach einem der vorhergehenden Ansprüche, wenn das Computerprogramm auf einem Rechner ausgeführt wird

14. Lichtmikroskop (1) zur Lokalisation und/oder zum Verfolgen von Emittern (A, B, C) in einer Probe (2) mit:
- einer Beleuchtungsvorrichtung zum Bestrahlen der Probe (2) mit Beleuchtungslicht über einen definierten räumlichen Bereich (20, 21, 23), wobei das Beleuchtungslicht über den definierten räumlichen Bereich (20, 21, 23) ein lokales Lichtintensitätsminimum und um das Lichtintensitätsminimum herum angeordnete lokale Lichtintensitätsmaxima hat, und wobei das Beleuchtungslicht die Emitter (A, B, C) in der Probe (2) zur Emission von Licht anregt oder die Emission von Licht durch die Emitter (A, B, C) verhindert,
- einer Lichterfassungsvorrichtung zum Erfassen von von den Emittern (A, B, C) abgestrahlten Lichtmengen,
- einer Steuereinrichtung (13) zum Steuern der Position des Lichtintensitätsminimums des Beleuchtungslichts der Beleuchtungsvorrichtung,
- eine Auswerteeinrichtung zum Speichern und Auswerten von Datensätzen der mittels der Lichterfassungseinrichtung aufgenommenen, von den Emittern (A, B, C) abgestrahlten Lichtmengen,
**dadurch gekennzeichnet, dass** die Auswerteeinrichtung zur Bestimmung der Metadaten (λ, λ(C0), λ(B), λ(C1)) und Zuordnung mindestens einer Lichtsignalfolge (22) zu einer jeweiligen Markierungsposition der Probe (2) und/oder einem jeweiligen Emitter (A, B, C) gemäß einem Verfahren nach einem der Ansprüche 1 bis 12 eingerichtet ist.

15. Lichtmikroskop nach Anspruch 14, **dadurch gekennzeichnet, dass** das Lichtmikroskop (1) ein visuelles Benutzerinterface (40) hat, wobei die Auswerteeinrichtung dazu eingerichtet ist, dem Benutzer auf dem visuellen Benutzerinterface (40) unter Verwendung der Metadaten (λ, λ(C0), λ(B), λ(C1)) eine Zwischenauswertung der aufgenommenen Datensätze darzustellen.

## Claims

1. Method for localizing and/or tracking emitters (A, B, C) in a sample (2), wherein the sample (2) is irradiated over a defined spatial region (20, 23) with illumination light that has a local light intensity minimum within the defined spatial region (20, 23) and local light intensity maxima arranged around the light intensity minimum, wherein
a) the local light intensity minimum is positioned at various locations around an estimated position (33) of an individual emitter (A, B, C), and in each case an amount of light emitted by the emitter (A, B, C) is recorded and stored as a dataset,
b) an improved estimated position (33) of the emitter (A, B, C) is determined from data of the recorded light amounts,
wherein, during the recording of the light amounts and storage of the datasets in the aforementioned steps, temporal profiles of the light amount received from individual emitters (A, B, C) are stored as light signal sequences (22), wherein metadata (λ, λ(C0), λ(B), λ(C1)) are determined in parallel with the recording of the light amounts or in an additional illumination step performed in addition to the aforementioned steps, and wherein the metadata (λ, λ(C0), λ(B), λ(C1)) are used for assigning at least one light signal sequence (22) to a respective labeling position of the sample (2) and/or to a respective emitter (A, B, C), **characterized in that**, based on the metadata (λ, λ(C0), λ(B), λ(C1)), datasets of temporally separated light emissions from emitters (A, B, C) are correlated with one another, thereby increasing the accuracy in determining the improved estimated position (33) of the emitter (A, B, C) and/or assigning the datasets to the same labeling position or the same emitter (A, B, C).

2. Method according to claim 1, **characterized in that**, during the recording of the light amounts and storage of the datasets in the aforementioned steps, the temporal profile of the light amount received from the individual emitter (A, B, C) is stored and evaluated as a light signal sequence (22), and the metadata (λ, λ(C0), λ(B), λ(C1)) are determined therefrom.

3. Method according to claim 1 or 2, **characterized in that**, in the additional illumination step, an amount of light emitted by the emitter (A, B, C) is recorded in each case and an additional dataset is stored on the basis of the light amount, and the metadata (λ, λ(C0), λ(B), λ(C1)) are determined from the additional dataset.

4. Method according to claim 3, **characterized in that**, in the additional illumination step, the local light intensity minimum is positioned at a single fixed location in the sample (2) that is spaced apart from the estimated position (33) of the individual emitter (A, B, C).

5. Method according to one of the preceding claims, **characterized by** at least one of the features i), ii), iii), iv), v), vi):
i) steps a) and b) of claim 1 are repeated iteratively until a termination criterion is reached, with an improved estimated position (33) of the emitter (A, B, C) being determined in each case,
ii) one, several, or all emitters (A, B, C) are designed as fluorescence emitters, in particular as a fluorescent dye molecule, a fluorescent chemical group of a fluorescent dye molecule, and/or a fluorescent protein, in particular a reversibly switchable fluorescent protein,
iii) several or all emitters (A, B, C) belong to the same species,
iv) one, several, or all emitters (A, B, C) are designed as quantum dots and/or as upconversion nanoparticles,
v) during the method, microscopically visualizable elements of the sample (2) are labeled using PAINT (Point Accumulation for Imaging in Nanoscale Topography),
vi) during the method, microscopically visualizable elements of the sample (2) are labeled using DNA-PAINT and/or Exchange-PAINT, in particular with emitters (A, B, C) of different colors.

6. Method according to claim 5, **characterized in that**, in feature i), the generation of the metadata (λ, λ(C0), λ(B), λ(C1)) is performed during the iterative process.

7. Method according to claim 5, **characterized in that**, in feature vi), systems comprising imager strands and emitters are used for labeling, which are identical to one another.

8. Method according to one of the preceding claims, **characterized in that**, for determining metadata (λ, λ(C0), λ(B), λ(C1)), one, several, or all of the following steps are carried out:
a) ratiometric detection of light amounts of an emitter (A, B, C),
b) evaluation of emission wavelength characteristics or excitation wavelength characteristics of light amounts of an emitter (A, B, C),
c) evaluation of lifetime information of an emitter (A, B, C),
d) temporally high-resolution determination of signal characteristics of the light signal sequences (22), in particular fluctuation metrics, e.g., by statistical evaluation.

9. Method according to one of the preceding claims, **characterized in that**, based on the metadata (λ, λ(C0), λ(B), λ(C1)), one, several, or all of the following steps are carried out:
a) detection of a background and minimization of the influence of the detected background on the assignment of at least one light signal sequence (22) to a respective labeling site of the sample (2) or a respective emitter (A, B, C),
b) generation of a, in particular time-resolved, chemical map of the sample (2) from the metadata (λ, λ(C0), λ(B), λ(C1)),
c) identification of an emitter (A, B, C) that was lost during tracking of the emitter (A, B, C),
d) adjustment of sample parameters in order to improve the emission behavior of the emitters (A, B, C).

10. Method according to one of the preceding claims, **characterized in that** an intermediate evaluation of the recorded datasets is displayed to the user on a visual user interface (40) using the metadata (λ, λ(C0), λ(B), λ(C1)).

11. Method according to claim 10, **characterized in that** an intermediate evaluation of the recorded datasets is displayed to the user on the visual user interface (40), in which individual measurement results in the datasets are represented in a two-dimensional representation, in which metadata (λ, λ(C0), λ(B), λ(C1)) are plotted over a spatial coordinate of the sample (2).

12. Method according to claim 10 or 11, **characterized in that** the user interface (40) has an input option for the user, with which the user can adjust the further evaluation of the recorded datasets based on a manual selection of metadata (λ, λ(C0), λ(B), λ(C1)), in particular by means of a manual selection directly in the visual representation of the metadata (λ, λ(C0), λ(B), λ(C1)) in the visual user interface (40).

13. Computer program comprising program code means adapted to carry out the method according to one of the preceding claims when the computer program is executed on a computer.

14. Light microscope (1) for localizing and/or tracking emitters (A, B, C) in a sample (2), comprising:
- an illumination device for irradiating the sample (2) with illumination light over a defined spatial region (20, 21, 23), wherein the illumination light has a local light intensity minimum within the defined spatial region (20, 21, 23) and local light intensity maxima arranged around the light intensity minimum, and wherein the illumination light excites the emitters (A, B, C) in the sample (2) to emit light or prevents the emission of light by the emitters (A, B, C),
- a light detection device for detecting amounts of light emitted by the emitters (A, B, C),
- a control device (13) for controlling the position of the light intensity minimum of the illumination light of the illumination device,
- an evaluation device for storing and evaluating datasets of the amounts of light emitted by the emitters (A, B, C) recorded by the light detection device,
**characterized in that** the evaluation device is configured to determine the metadata (λ, λ(C0), λ(B), λ(C1)) and to assign at least one light signal sequence (22) to a respective labeling position of the sample (2) and/or to a respective emitter (A, B, C) according to a method according to one of claims 1 to 12.

15. Light microscope according to claim 14, **characterized in that** the light microscope (1) has a visual user interface (40), wherein the evaluation device is configured to display to the user an intermediate evaluation of the recorded datasets on the visual user interface (40) using the metadata (λ, λ(C0), λ(B), λ(C1)).

## Revendications

1. Procédé de localisation et/ou de suivi d'émetteurs (A, B, C) dans un échantillon (2), dans lequel l'échantillon (2) est irradié sur une zone spatiale définie (20, 23) avec une lumière d'éclairage qui présente, sur ladite zone spatiale définie (20, 23), un minimum local d'intensité lumineuse et des maxima locaux d'intensité lumineuse disposés autour dudit minimum d'intensité lumineuse, sachant que
a) le minimum local d'intensité lumineuse est placé à différents endroits autour d'une position estimée (33) d'un émetteur individuel (A, B, C), et une quantité de lumière respective émise par l'émetteur (A, B, C) est enregistrée et stockée sous forme d'ensemble de données,
b) une position estimée améliorée (33) de l'émetteur (A, B, C) est déterminée à partir des données relatives aux quantités de lumière enregistrées,
lors de l'enregistrement des quantités de lumière et du stockage des ensembles de données au cours des étapes susmentionnées, les courbes de la quantité de lumière, reçue des émetteurs individuels (A, B, C), sur le temps sont enregistrées sous forme de séquences de signaux lumineux (22),
des métadonnées (λ, λ(C0), λ(B), λ(C1)) sont déterminées parallèlement à l'enregistrement des quantités de lumière ou lors d'une étape d'éclairage effectuée en plus des étapes susmentionnées,
et les métadonnées (λ, λ(C0), λ(B), λ(C1)) sont utilisées pour attribuer au moins une séquence de signaux lumineux (22) à une position de marquage respective de l'échantillon (2) et/ou à un émetteur respectif (A, B, C),
**caractérisé en ce que**, à l'aide des métadonnées (λ, λ(C0), λ(B), λ(C1)), les ensembles de données de rayonnements lumineux émis à intervalles temporels par les émetteurs (A, B, C) sont corrélés entre eux, ce qui permet d'augmenter la précision de la détermination de la position estimée améliorée (33) de l'émetteur (A, B, C) et/ou d'attribuer les ensembles de données à la même position de marquage ou au même émetteur (A, B, C).

2. Procédé selon la revendication 1,
**caractérisé en ce que**, lors de l'enregistrement des quantités de lumière et du stockage des ensembles de données au cours des étapes susmentionnées, la courbe de la quantité de lumière, reçue de l'émetteur individuel (A, B, C), sur le temps est enregistrée sous forme de séquence de signaux lumineux (22) et est évaluée pour en déterminer les métadonnées (λ, λ(C0), λ(B), λ(C1)).

3. Procédé selon la revendication 1 ou 2,
**caractérisé en ce que**, lors de l'étape d'éclairage supplémentaire, une quantité de lumière respective émise par l'émetteur (A, B, C) est enregistrée et un ensemble de données supplémentaire est stocké sur la base de cette quantité de lumière, et les métadonnées (λ, λ(C0), λ(B), λ(C1)) sont déterminées à partir de cet ensemble de données supplémentaire.

4. Procédé selon la revendication 3,
**caractérisé en ce que**, lors de l'étape d'éclairage supplémentaire, le minimum local d'intensité lumineuse est placé en un seul endroit fixe dans l'échantillon (2), qui est espacé de la position estimée (33) de l'émetteur individuel (A, B, C).

5. Procédé selon l'une des revendications précédentes,
**caractérisé par** au moins l'une des caractéristiques i), ii), iii), iv), v), vi) :
i) les étapes a) et b) de la revendication 1 sont répétées de manière itérative jusqu'à une limite d'arrêt en déterminant une position estimée améliorée (33) respective de l'émetteur (A, B, C),
ii) un, plusieurs ou tous les émetteurs (A, B, C) sont conçus comme des émetteurs de fluorescence, en particulier comme une molécule de colorant fluorescent, un groupe chimique fluorescent d'une molécule de colorant fluorescent et/ou une protéine fluorescente, en particulier une protéine fluorescente à commutation réversible,
iii) plusieurs ou tous les émetteurs (A, B, C) appartiennent chacun à la même espèce,
iv) un, plusieurs ou tous les émetteurs (A, B, C) sont conçus sous forme de points quantiques et/ou de nanoparticules à conversion ascendante,
v) les éléments de l'échantillon (2) à visualiser au microscope au cours du procédé sont marqués au moyen de la technique PAINT (Point Accumulation for Imaging in Nanoscale Topography),
vi) les éléments de l'échantillon (2) à visualiser au microscope au cours du procédé sont marqués au moyen de la technique DNA-PAINT et/ou Exchange-PAINT, en particulier avec des émetteurs (A, B, C) de couleurs différentes.

6. Procédé selon la revendication 5,
**caractérisé en ce que**, dans la caractéristique i), la génération des métadonnées (λ, λ(C0), λ(B), λ(C1)) est effectuée au cours du processus itératif.

7. Procédé selon la revendication 5,
**caractérisé en ce que**, dans la caractéristique vi), des systèmes composés d'un brin d'imageur et d'un émetteur sont utilisés pour le marquage, qui sont identiques entre eux.

8. Procédé selon l'une des revendications précédentes,
**caractérisé en ce que**, pour la détermination des métadonnées (λ, λ(C0), λ(B), λ(C1)), une, plusieurs ou toutes les étapes suivantes sont mises en œuvre :
a) détection ratiométrique des quantités de lumière d'un émetteur (A, B, C),
b) évaluation des caractéristiques de longueur d'onde d'émission ou des caractéristiques de longueur d'onde d'excitation des quantités de lumière d'un émetteur (A, B, C),
c) évaluation des informations de durée de vie d'un émetteur (A, B, C),
d) détermination à haute résolution temporelle des caractéristiques de signal des séquences de signaux lumineux (22), en particulier des indices de fluctuation, par exemple par évaluation statistique.

9. Procédé selon l'une des revendications précédentes,
**caractérisé en ce que**, à l'aide des métadonnées (λ, λ(C0), λ(B), λ(C1)), une, plusieurs ou toutes les étapes suivantes sont mises en œuvre :
a) détection d'un bruit de fond et minimisation de l'influence du bruit de fond détecté sur l'attribution de ladite au moins une séquence de signaux lumineux (22) à un endroit de marquage respectif de l'échantillon (2) ou à un émetteur respectif (A, B, C),
b) génération d'une carte chimique, en particulier à résolution temporelle, de l'échantillon (2) à partir des métadonnées (λ, λ(C0), λ(B), λ(C1)),
c) identification d'un émetteur (A, B, C) qui a été perdu au cours d'un suivi de l'émetteur (A, B, C),
d) ajustement des paramètres d'échantillonnage afin d'améliorer le comportement d'émission des émetteurs (A, B, C).

10. Procédé selon l'une des revendications précédentes,
**caractérisé en ce qu'**une évaluation intermédiaire des ensembles de données enregistrés est présentée à l'utilisateur sur une interface utilisateur visuelle (40) en utilisant les métadonnées (λ, λ(C0), λ(B), λ(C1)).

11. Procédé selon la revendication 10,
**caractérisé en ce qu'**une évaluation intermédiaire des ensembles de données enregistrés est présentée à l'utilisateur sur l'interface utilisateur visuelle (40), dans laquelle les résultats de mesure individuels dans les ensembles de données sont représentés dans une représentation bidimensionnelle où les métadonnées (λ, λ(C0), λ(B), λ(C1)) sont reportées sur une coordonnée spatiale de l'échantillon (2).

12. Procédé selon la revendication 10 ou 11,
**caractérisé en ce que** l'interface utilisateur (40) comporte une possibilité de saisie pour l'utilisateur, grâce à laquelle l'utilisateur peut ajuster la poursuite de l'évaluation des ensembles de données enregistrés au moyen d'une sélection manuelle de métadonnées (λ, λ(C0), λ(B), λ(C1)), en particulier au moyen d'une sélection manuelle directement dans la représentation visuelle des métadonnées (λ, λ(C0), λ(B), λ(C1)) dans l'interface utilisateur visuelle (40).

13. Programme informatique comprenant des moyens de code de programme, conçu pour mettre en œuvre le procédé selon l'une des revendications précédentes, lorsque le programme informatique est exécuté sur un ordinateur.

14. Microscope optique (1) destiné à la localisation et/ou au suivi d'émetteurs (A, B, C) dans un échantillon (2), comprenant :
- un dispositif d'éclairage destiné à irradier l'échantillon (2) avec une lumière d'éclairage sur une zone spatiale définie (20, 21, 23), sachant que la lumière d'éclairage présente, sur la zone spatiale définie (20, 21, 23), un minimum local d'intensité lumineuse et des maxima locaux d'intensité lumineuse disposés autour dudit minimum d'intensité lumineuse, et que la lumière d'éclairage excite les émetteurs (A, B, C) dans l'échantillon (2) pour qu'ils émettent de la lumière ou empêche l'émission de lumière par les émetteurs (A, B, C),
- un dispositif de détection de lumière destiné à détecter les quantités de lumière émises par les émetteurs (A, B, C),
- un dispositif de commande (13) destiné à commander la position du minimum d'intensité lumineuse de la lumière d'éclairage du dispositif d'éclairage,
- un dispositif d'évaluation destiné à stocker et à évaluer des ensembles de données relatifs aux quantités de lumière émises par les émetteurs (A, B, C) et enregistrées au moyen du dispositif de détection de lumière,
**caractérisé en ce que** le dispositif d'évaluation est conçu pour déterminer les métadonnées (λ, λ(C0), λ(B), λ(C1)) et pour attribuer au moins une séquence de signaux lumineux (22) à une position de marquage respective de l'échantillon (2) et/ou à un émetteur respectif (A, B, C) par un procédé selon l'une des revendications 1 à 12.

15. Microscope optique selon la revendication 14,
**caractérisé en ce que** le microscope optique (1) comporte une interface utilisateur visuelle (40), le dispositif d'évaluation étant conçu pour présenter à l'utilisateur, sur l'interface utilisateur visuelle (40), une évaluation intermédiaire des ensembles de données enregistrés en utilisant les métadonnées (λ, λ(C0), λ(B), λ(C1)).
